# EUROPEAN PATENT APPLICATION

(11) **EP 4 742 308 A1**
(43) Date of publication of application: **13.05.2026**
(21) Application number: 25208660.8
(22) Date of filing: 14.10.2025
(51) Int. Cl.: H01M 4/04, H01M 10/04

(54) **ELECTRODE SUBSTRATE PROCESSING APPARATUS AND ELECTRODE SUBSTRATE PROCESSING METHOD**

(30) Priority: 08.11.2024 KR 20240158078
(71) Applicant: SAMSUNG SDI CO., LTD., Yongin-si, Gyeonggi-do 17084 (KR)
(72) Inventor: KO, Taeyoung, 17084 Yongin-si, Gyeonggi-do (KR)
(74) Representative: Bardehle Pagenberg Partnerschaft mbB Patentanwälte Rechtsanwälte

(57) **Abstract**

A substrate processing apparatus includes an encoder configured to measure a substrate transport speed and a substrate transport position of a substrate being transported, a scanner configured to scan one surface of the substrate using light at predetermined time intervals, and a scanner control unit configured to control a scan trajectory based on the substrate transport speed and the substrate transport position, wherein the scanner control unit maintains a scan trajectory constant regardless of changes in the substrate transport speed by changing a scan speed of the scanner in real time.

## Description

### BACKGROUND

### 1. Field

The present disclosure relates to an electrode substrate processing apparatus and an electrode substrate processing method.

### 2. Description of Related Art

A secondary battery may be completed by manufacturing an electrode by coating an electrode mixture, which contains an electrode active material, a conductive material, and a binder, on an electrode current collector, laminating the electrode with a separator, and then embedding and sealing the electrode in a battery case together with an electrolyte. During the electrode manufacturing process, a composite may be coated on a long sheet-shaped electrode current collector, and the resulting substrate may be notched to process an electrode tab, and then cut to a desired size to be manufactured into an electrode plate.

The above information disclosed in this Background section is for enhancement of understanding of the background of the present disclosure, and therefore, it may contain information that does not constitute related (or prior) art.

### SUMMARY

According to the present invention, a substrate processing apparatus and a method for processing a substrate as claimed in claims 1 and 8 are provided. Preferred embodiments of the invention are described in the dependent claims.

Embodiments include a substrate processing apparatus, including an encoder configured to measure a substrate transport speed and a substrate transport position of a substrate being transported, a scanner configured to scan one surface of the substrate using light at predetermined time intervals, and a scanner control unit configured to control a scan trajectory based on the substrate transport speed and the substrate transport position, wherein the scanner control unit maintains a scan trajectory constant regardless of changes in the substrate transport speed by changing a scan speed of the scanner in real time.

A substrate processing trajectory of the scanner control unit may include a first processing trajectory processed in a direction from one side of the substrate toward an inside of the substrate, a second processing trajectory processed in a longitudinal direction of the substrate within the substrate, and a third processing trajectory processed in a direction from the inside of the substrate toward the one side of the substrate, wherein the substrate is processed in an order of the first processing trajectory, the second processing trajectory, and the third processing trajectory, and the substrate is repeatedly processed according to the substrate processing trajectory.

The scanner control unit may be configured to maintain the scan trajectory and the substrate processing trajectory by maintaining the light constant regardless of changes in the substrate transport speed by controlling the scan speed to allow a relative speed, the relative speed being a ratio between the substrate transport speed and the scan speed, to be maintained constant, and the scan speed may be a scan speed of the light corresponding to the first processing trajectory or the third processing trajectory.

The substrate may be cut along the substrate processing trajectory to form an electrode plate.

The scan speed of the scanner corresponding to the second processing trajectory may be zero.

The first processing trajectory and the third processing trajectory may each parallel to a width of the substrate.

The substrate may include a composite portion having a part of one surface coated with a composite, and a non-coated portion located on an outer part of the one surface, the first processing trajectory starts from one side of the non-coated portion, and the third processing trajectory ends at the one side of the non-coated portion.

The second processing trajectory may be within the composite portion.

A pattern jig may have a through hole corresponding to the scan trajectory of the light is at a bottom of the substrate, and the light may penetrate the through hole of the pattern jig.

The substrate processing apparatus may further include a suction portion configured to suck processing debris of the substrate through the through hole of the pattern jig, wherein the suction portion is on a lower side of the pattern jig.

The substrate processing apparatus may further include a beam dump configured to attenuate an intensity of light which penetrates the through hole of the pattern jig, wherein the beam dump is on a lower side of the pattern jig.

The substrate processing apparatus may further include a light control device, wherein the light control device controls an output or a pulse repetition rate of the light in real time according to changes in the scan speed of the light.

Embodiments include a method for processing a substrate, the method including measuring, by an encoder, a substrate transport speed and a substrate transport position of a substrate, scanning, by a scanner, one surface of the substrate using light at predetermined time intervals, and controlling, by a scanner control unit, a scan trajectory based on the substrate transport speed and the substrate transport position, wherein the scanner control unit maintains constant the scan trajectory regardless of changes in the substrate transport speed by changing a scan speed of the scanner in real time.

Controlling the scan trajectory may include inputting a processing trajectory length and a relative speed of the substrate, and generating a scan trajectory corresponding to the processing trajectory length, wherein generating the scan trajectory may include controlling the scan speed of the scanner to allow a relative speed, the relative speed being a ratio between the substrate transport speed and the scan speed of the scanner, to be maintained constant.

In generating the scan trajectory corresponding to the processing trajectory length, a substrate processing trajectory may include a first processing trajectory processed in a direction from one side of the substrate toward an inside of the substrate, a second processing trajectory processed in a longitudinal direction of the substrate within the substrate, and a third processing trajectory processed in a direction from the inside of the substrate toward the one side of the substrate, wherein the substrate is processed in an order of the first processing trajectory, the second processing trajectory, and the third processing trajectory, and the substrate is repeatedly processed by the substate processing trajectory.

A pattern jig having a through hole corresponding to the scan trajectory of the light may be located at a bottom of the substrate, and the light may penetrate the through hole of the pattern jig.

The scanning, by the scanner, may include scanning one surface of the substrate using light at predetermined time intervals, and the substrate may be cut along the substrate processing trajectory to form an electrode plate.

In generating the scan trajectory corresponding to the processing trajectory length, the scan speed of the scanner corresponding to the second processing trajectory may be zero.

The substrate may include a composite portion having a part of one surface coated with a composite, and a non-coated portion located on an outer part of the one surface, the first processing trajectory may start from one side of the non-coated portion, and the third processing trajectory may end at the one side of the non-coated portion.

The second processing trajectory may be within the composite portion.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings.

Features will become apparent to those of ordinary skill in the art by describing in detail exemplary embodiments with reference to the attached drawings, in which:
FIG. 1 is a schematic view illustrating a substrate processing apparatus according to an embodiment of the present disclosure;
FIG. 2 is a schematic diagram illustrating a substrate processing apparatus according to an embodiment of the present disclosure;
FIG. 3 is a view showing a pattern jig and a trajectory of light according to an embodiment of the present disclosure;
FIG. 4 is a view showing an example of a light scan trajectory and a substrate processed accordingly, in accordance with an embodiment of the present disclosure;
FIG. 5 is a view showing an example of a light scan trajectory and a substrate processed accordingly by a substrate processing apparatus according to an embodiment of the present disclosure;
FIG. 6 is a view showing scan trajectories of region R of FIG. 5 and substrate processing trajectories according thereto;
FIG. 7 is a view showing scan trajectories of region R of FIG. 5 and substrate processing trajectories according thereto;
FIG. 8 is a flowchart for explaining a substrate processing method according to an embodiment of the present disclosure; and
FIG. 9 is a diagram for explaining a step of calculating a scan trajectory corresponding to a processing trajectory length according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her embodiments in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the disclosure and is not intended to limit the disclosure.

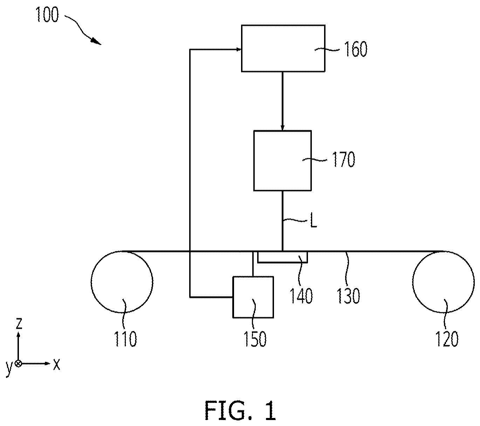

FIG. 1 is a schematic view illustrating a part of a substrate processing apparatus according to an embodiment of the present disclosure.

Referring to FIG. 1, a substrate processing apparatus 100 according to an embodiment of the present disclosure may include an encoder 150 that measures a transport speed and a transport position of a transported substrate 130, and a scanner that scans one surface of the substrate using light at predetermined time intervals. In the present disclosure, light L may mean laser light. Referring to FIG. 1, light may be irradiated vertically to one surface of the transported substrate 130, but the direction of the light may vary. The substrate processing apparatus may further include a scanner control unit 160 that controls the scan trajectory of the light L based on the transport speed and transport position of the transported substrate 130 measured by the encoder 150.

In the present disclosure, a scanner 170 that scans using light adjusts the angle at which light incident from its own or a separate light source is reflected so that the reflected light may be irradiated to one surface of a transported substrate 130. Accordingly, the scan trajectory of the scanner 170 may mean a trajectory that adds up the positions where light is incident on one surface of the transported substrate 130 by adjusting the angle at which the incident light is reflected.

In the present disclosure, the scan speed of the scanner 170 may mean the rate of change in the position at which light L is irradiated by adjusting an internal reflector, etc., while the device of the scanner 170 is fixed. In other embodiments, the position at which light L is irradiated may change as the scanner 170 itself moves. In this case, the speed at which the light L is finally irradiated on one surface of the transported substrate 130 may be referred to as the scan speed of the scanner.

In the present disclosure, the substrate may mean a long sheet-shaped metal that may be manufactured into an electrode assembly or an electrode plate forming an electrode assembly of a secondary battery. The substrate may be supplied to the processing process in a wound state in the form of a thin film.

The material (e.g., the substrate) may be continuously transported by being supplied by a supply reel and recovered by a recovery reel. For example, as illustrated in FIG. 1, a sheet-shaped reel-type substrate may be unwound from an unwinding portion 110 and then wound up from a winding portion 120 spaced apart from the unwinding portion 110 by a predetermined distance. Here, any shape may be adopted as the shape of the unwinding portion 110 and the winding portion 120 as long as they are shapes that may perform the functions of unwinding and winding.

By irradiating light L vertically on one surface of the transported substrate 130 before being wound after being unwound, the part where the light L comes into contact with the transported substrate 130 may melt due to heat to leave a trace, or may be processed by noncontact cutting. In the present disclosure, processing may include notching, cutting to a desired size, or welding.

As shown in FIG. 1, the transported substrate 130 does not necessarily have to be transferred in the horizontal direction (x direction), and the direction may vary. However, in order to facilitate the recovery of debris or foreign substances generated during the processing of the transported substrate 130 downward, horizontal transport may be advantageous in the process.

In an embodiment, the pattern jig 140 may be disposed at the bottom of the transported substrate 130 being transported. Specifically, the pattern jig 140 may be disposed on the opposite surface of one surface of the transported substrate 130 where scanning is performed by light L. The pattern jig 140 may be disposed on a surface corresponding to one surface on which light L is scanned. Accordingly, the through hole formed in the pattern jig 140 may be formed in a shape approximately identical to the scan trajectory of the light L so that the light L may pass through the through hole.

One or more pattern jigs 140 may be disposed at the bottom of the transported substrate 130. For example, the number of scanners 170 and the number of pattern jigs 140 corresponding thereto may be the same. In addition, the pattern jig 140 may be a jig equipped with a function to secure a transported substrate 130 being transported at high speed so that the transported substrate 130 does not vibrate or come off. For example, the pattern jig 140 may prevent the focus of the transported substrate 130 from changing during notching processing by light L.

Unlike that illustrated in FIG. 1, the substrate processing apparatus 100 according to an embodiment may not include a pattern jig 140. A substrate processing apparatus 100 according to an embodiment may maintain a constant scan trajectory of light L by an encoder 150, a scanner control unit 160, and a scanner 170 even when a pattern jig 140 is not disposed. Hereinafter, a substrate processing apparatus with a pattern jig attached is described as an example.

In an embodiment, an encoder 150 may be disposed below the transported substrate 130 to measure the transport speed and position of the transported substrate 130. The encoder 150 may measure the position of the transported substrate 130 in real time and adjust the transported substrate 130 so that the transported substrate 130 is disposed exactly at the desired position. This may be to form a notch in an accurate location during notching processing.

An encoder 150 according to an embodiment may measure the transport speed and position of the transported substrate 130 to synchronize the operations of the substrate processing apparatus 100 and the transported substrate 130. This may improve the precision of the processing work. In addition, the encoder 150 may monitor whether the substrate processing apparatus 100 accurately forms a notch, etc. at a set position by providing position data of the transported substrate 130 to maintain the quality of processing. If an error occurs, the error may be corrected to reduce the occurrence of defective products.

The scanner control unit 160 according to an embodiment may receive data on the transport speed and position of the transported substrate 130 from the encoder 150 described above and control the operation of the scanner 170. Specifically, the scanner control unit 160 may receive information on the transport speed and the position of the transported substrate 130, which were measured by the encoder 150, in real time, and change the operation of the scanner 170 in real time. For example, the optical L (e.g., Light) scan speed of the scanner 170 may be changed in real time. In response, the scan trajectory of light L may be changed in real time. However, due to the need for scan trajectory consistency described later, some controls may be added to maintain the scan trajectory.

The scanner 170 may process the substrate by scanning one surface of the transported substrate 130 vertically using light L. The scanner 170 may be controlled by the scanner control unit 160, and may scan the light L on the transported substrate 130 by changing the speed and position of the light L according to the settings of the scanner control unit 160.

For example, the scanner 170 may be a galvano scanner (e.g., a galvanometer scanner). The scanner 170 may control light L at high speed and position the light accurately. The scanner 170 may adjust the direction of the light by using two small rotatable reflectors (e.g., mirrors disposed respectively on the x-axis and y-axis). Each mirror is rotated by a high-speed electromagnetic motor, which may finely adjust its angle according to an electrical signal. Here, the electrical signal may be a signal transmitted from the scanner control unit 160 described above. The scanner 170 may quickly form a precise light pattern by finely adjusting the angle of the mirror. In the present disclosure, the scanner 170 may or may not include a light source that provides light. For example, a constant scan trajectory may be formed by controlling the irradiation angle of light incident from a separate light source.

In an embodiment, the scanner control unit 160 may change the optical scan speed of the scanner 170 in real time so that the relative speed between the transport speed of the transported substrate 130 and the optical scan speed of the scanner 170 remains constant even if the transport speed of the transported substrate 130 measured by the encoder 150 changes. Through this, even if the substrate transport speed changes, the light scan trajectory and the light-based substrate processing trajectory may be maintained, respectively. The specific operation method for this will be described later.

In addition, the scanner 170 may repeatedly irradiate light L to one surface of the transported substrate 130 at predetermined time intervals as described above to form a certain processing pattern on the transported substrate 130. Here, the processing pattern may be a notching pattern forming electrode tabs at a constant distance apart on one surface of the transported substrate 130.

A substrate processing apparatus 100 according to an embodiment may be a substrate notching device that cuts the transported substrate 130 using light L according to the processing trajectory of the transported substrate 130. Accordingly, the portion notched according to the processing trajectory may be, for example, a portion formed by cutting a portion of the substrate excluding the electrode tab portion. However, all substrate processing apparatuses using light and continuously transported substrates in addition to the substrate notching device may be included.

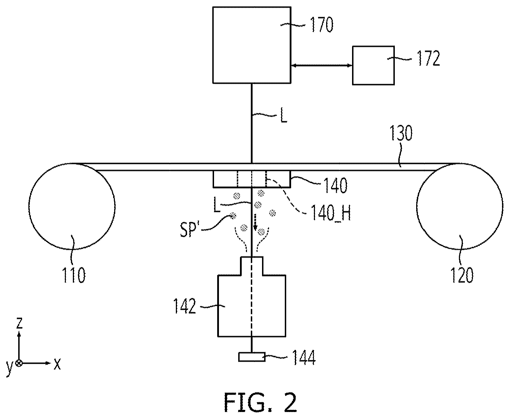

FIG. 2 is a schematic diagram illustrating a substrate processing apparatus according to an embodiment of the present disclosure. FIG. 2 is a view for explaining a part of the substrate processing apparatus shown in FIG. 1, and a substrate processing process on one surface and the opposite surface of the substrate where processing by light is performed.

Referring to FIG. 2, a substrate processing apparatus according to an embodiment may have a pattern jig 140 disposed at the bottom of a transported substrate 130 being transported. The pattern jig 140 may be a jig in which a through hole 140_H corresponding to a predetermined optical scan trajectory calculated in advance by a scanner control unit (e.g., 160 of FIG. 1) is formed. Accordingly, light L irradiated from the scanner 170 may pass through the through hole 140_H of the pattern jig while processing the transported substrate 130.

According to some embodiments of the present disclosure, by allowing the scan trajectory of light produced by the scanner control unit to be constant, a pattern jig 140 having a through hole 140_H corresponding thereto (e.g., aligned with the light L) may be used. In this case, even if light L is irradiated, the light passes through the through hole 140_H of the pattern jig, so the problem of damage to an unwanted part of the pattern jig 140 may be solved. As described below, a pattern jig 140 disposed on the opposite surface of the substrate during processing may be required when processing a transported substrate 130 that is transported at high speed, so the scan trajectory of the light L may need to be maintained constant.

By inputting the processing trajectory length of the desired transported substrate 130 by the user, the length may be adjusted so that a specific scan trajectory of the light may be produced. In other embodiments, the processing trajectory length may correspond to a preset design value (i.e., the processing trajectory length may be a preset design value). Accordingly, the above-described arrangement becomes possible by providing a pattern jig 140 having a through hole 140_H corresponding to (e.g., aligned with) an optical scan trajectory that may be calculated according to a processing pattern and processing value of a transported substrate 130 to be processed.

Referring to FIG. 2, the substrate processing apparatus according to an embodiment may further include a suction portion 142 disposed at the bottom of the pattern jig 140. Specifically, the suction portion 142 may be disposed on the lower side of the pattern jig 140 which is disposed on the lower side of the substrate 130 being transported. The suction portion 142 may suction processing debris of the transported substrate 130 through the through hole 140_H of the pattern jig 140. As described above, the through hole 140_H may be an area where processing debris from laser processing accumulates in line with the optical scan trajectory of the scanner 170. Accordingly, the suction portion 142 may be disposed at the lower side to remove processing debris as shown in FIG. 2. Here, the processing debris SP' may be fine foreign substances such as dust generated during the processing process of the transported substrate 130 or residue (scrap) from the portion of the substrate being processed. If processing debris SP' accumulates on the pattern jig 140, the laser may be disturbed on the transported substrate 130 and may not be processed according to the set processing trajectory and processing dimensions. Therefore, a suction portion 142 according to an embodiment may be desirable for precise laser processing.

In a substrate processing apparatus according to an embodiment, a through hole 140_H of a pattern jig may be formed in a constant shape throughout the entire range of substrate transport speeds, so that suction of processing debris SP' through the suction portion 142 may be easily achieved throughout the entire range of transport speeds.

Referring to FIG. 2, the substrate processing apparatus according to an embodiment may further include a beam dump 144 disposed on the lower side of the pattern jig 140. Specifically, the beam dump 144 may be disposed on the lower side of the suction portion 142 on the path of light L. The suction portion 142 may perform the suction of the processing debris described above without obstructing the path of light L, and the beam dump 144 disposed on the lower side of the suction portion 142 may attenuate the intensity of light L passing through the through hole 140_H of the pattern jig. Because the through hole 140_H of the pattern jig may be formed consistently throughout the entire process in which the transfer speed of the transported substrate 130 is variable, the beam dump 144 may also be used throughout the entire speed section. Accordingly, the device may be operated even in sections where the transport speed of the transported substrate 130 changes, so that there is no loss in the process. This is because the scan trajectory of light L may be maintained constant even in sections where the transport speed of the transported substrate 130 changes.

In an embodiment, the beam dump 144 may absorb residual energy of the light L after processing the transported substrate 130 and convert it into heat energy so that the light is not reflected or does not travel along a different path. In the case of a high-power laser, device damage may occur if the residual beam is irradiated to a wrong location. The beam dump 144 may be disposed at the bottom of the transported substrate 130 to prevent the beam, which remains after substrate processing is completed, from being reflected or leaking in another direction.

Referring to FIG. 2, the substrate processing apparatus according to an embodiment may further include a light control device 172 (which may be in addition to the scanner control unit 160) capable of transmitting and receiving signals with a scanner 170. The position of the light control device 172 may vary. The light control device 172 may control the light output or pulse repetition rate (PRR) in real time according to the change in the scan speed of the light L.

The scan speed of light by the scanner 170 may be variable to always produce a constant optical scan trajectory even when the transport speed of the transported substrate 130 is variable. If the scan speed of light changes, the quality of the transported substrate 130 processed by the light L may change. The light control device 172 according to an embodiment may receive a scan speed signal of a scanner 170 in real time, and if the scan speed of light changes, the light control device 172 may change the output and/or pulse repetition rate of light L in real time in response to the change in the scan speed of light.

In an embodiment, when the transport speed of the transported substrate 130 is reduced, the optical scan speed of the scanner 170 may be reduced by the scanner control unit 160 which is set to maintain a constant relative speed between the transport speed of the transported substrate 130 and the optical scan speed of the scanner 170. In this case, the light control device 172 that receives the signal from the scanner 170 may reduce the light output and/or pulse repetition rate. When the transport speed of the transported substrate 130 increases, the optical scan speed of the scanner 170 increases, and the light control device 172 that detects this in real time may increase the output and/or pulse repetition rate of the light L.

Referring to FIG. 2, the light control device 172 is illustrated as transmitting and receiving signals separately from the scanner 170, but may be configured to be mounted within the scanner 170.

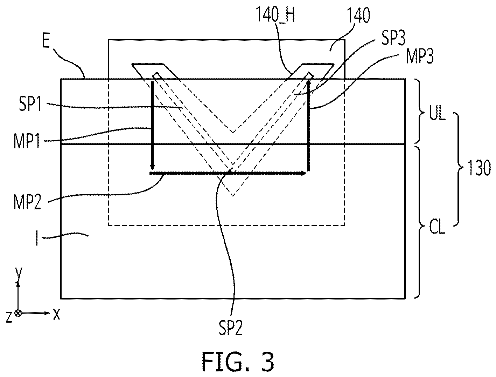

FIG. 3 is a view showing a pattern jig and a trajectory of light according to an embodiment of the present disclosure. FIG. 3 is a schematic diagram showing a top view of the transported substrate 130 and shows the scan trajectory of light on the top surface of the transported substrate 130, the processing trajectory of the transported substrate 130, and the overlapping appearance of the pattern jig 140 disposed at the bottom of the transported substrate 130.

In an embodiment, the scanner control unit 160 may control the optical scan speed of the scanner such that the relative speed, defined as the ratio between the substrate transport speed and the scan speed, is constant, thereby maintaining the scan trajectory and the substrate processing trajectory constant regardless of variations in the substrate transport speed.

When set to maintain relative speed, the scan trajectory may be kept constant even with fluctuations in the real-time optical scan speed. Here, it may mean not only a section where the transport speed of the transported substrate 130 increases or decreases, but also a point in time in a section where the transport speed is generally constant and may be defined as a constant velocity section. Minor speed changes may occur even in the constant velocity transport section due to equipment errors. Even in this case, the scanner control unit receives information on the transport speed and position of the substrate from the encoder in real time, so the scan trajectory of light may be kept constant.

In the present disclosure, a trajectory, along which a transported substrate 130 is processed according to a scan trajectory of light, is defined as a substrate processing trajectory. For example, the substrate processing trajectory may mean a notching trajectory by light. In this case, an electrode plate having electrode tabs formed in the shape of a processing trajectory may be manufactured.

In the present disclosure, the substrate processing trajectory may include, as illustrated in FIG. 3, a first processing trajectory MP1 that is processed in a direction from one side E of the transported substrate 130 toward the inside I of the substrate, a second processing trajectory MP2 that is processed in the longitudinal direction (x direction) of the substrate from the inside I of the transported substrate 130, and a third processing trajectory MP3 that is processed in a direction from the inside I of the transported substrate 130 toward the one side E of the transported substrate 130. In this case, the transported substrate 130 may be processed in the order of a first processing trajectory MP1, a second processing trajectory MP2, and a third processing trajectory MP3. In addition, the transported substrate 130 may be repeatedly processed at predetermined time intervals by processing trajectories composed in the order of a first processing trajectory MP1, a second processing trajectory MP2, and a third processing trajectory MP3, thereby forming a substrate having a processing pattern. The processing pattern may be, for example, a notching pattern by laser notching processing.

In the present disclosure, an optical scan trajectory that forms a first processing trajectory MP1 on one surface of a transported substrate 130 is defined as a first scan trajectory SP1, an optical scan trajectory that forms a second processing trajectory MP2 is defined as a second scan trajectory SP2, and an optical scan trajectory that forms a third processing trajectory MP3 is defined as a third scan trajectory SP3. The optical scan trajectory of the scanner may form a specific substrate processing trajectory on the transported substrate 130 by the transport speed of the transported substrate 130. Here, processing may mean notching.

In an embodiment, the optical scan speed of the scanner in the definition of the relative speed described above may be a scan speed of light, which corresponds to the first processing trajectory MP1 or the third processing trajectory MP3. That is, the "scan speed of light of the scanner", which should maintain a constant relative speed regardless of the change in the transport speed of the transported substrate 130, may mean the scan speed of light that forms the first processing trajectory MP1 or the third processing trajectory MP3.

In an embodiment, the optical scan speed of the scanner corresponding to the second processing trajectory MP2 may be zero. That is, the second scan trajectory SP2 of light forming the second processing trajectory MP2 may mean one point, as illustrated in FIG. 3. At this time, the transport of the transported substrate 130 is performed in the longitudinal direction (x direction) of the substrate, so that the transported substrate 130 may be processed in a straight line in the longitudinal direction (x direction) by a predetermined length by the second scan trajectory SP2.

In an embodiment, the transported substrate 130 may include a composite portion CL having at least one surfaced coated with a mixture, and a non-coated portion UL formed on the outer portion of at least one surface. The composite is a mixture of an electrode active material, a conductive material, and a binder, and may be applied and dried on an electrode current collector to prepare a substrate. As described above, the material may be wound in the winding portion and returned to the unwinding portion to enable continuous transport. The non-coated portion UL refers to the area other than the composite portion CL. The non-coated portion UL may refer to any area on the transported substrate 130, where the composite is not applied.

In an embodiment, the composite portion CL may be included on both surfaces of the transported substrate 130. The non-coated portion UL may also be included on both surfaces of the substrate. The position of the non-coated portion UL may correspond to the position of the composite portion CL (e.g., the non-coated portion UL may meet/contact the composite portion CL), but the positions of one relative to the other may vary.

In an embodiment, the non-coated portion UL may be formed on an outer portion of the substrate. In the substrate processing apparatus, the processing trajectory of the transported substrate 130 according to the scan trajectory of the light may be located on one outer side of the non-coated portion UL, so that one side of the transported substrate 130 may be notched in a certain pattern to form an electrode tab. In a subsequent process, the substrate may be cut into pieces each including an electrode tab, but other scenarios are possible.

Referring to FIG. 3, in an embodiment, a first processing trajectory MP1 may start at one side E of the non-coated portion UL, and a third processing trajectory MP3 may end at the one side E of the non-coated portion UL. In this way, one side E of the transported substrate 130 may be, for example, cut and separated. At this time, the second processing trajectory MP2 may be located within the non-coated portion UL or within the composite portion CL. In the present disclosure, one side E may mean a side on the non-coated portion UL.

Referring to FIG. 3, the through hole 140_H of the pattern jig may be manufactured to correspond to the scan trajectory of light and disposed at the bottom of the transported substrate 130. Accordingly, light may pass through the through hole 140_H, thereby not damaging the pattern jig 140. Additionally, the function of a suction portion (e.g., 142 in FIG. 2) or a beam dump (e.g., 144 in FIG. 2) disposed on the lower side of the pattern jig 140 may be utilized. Because one pattern jig 140 may be used throughout the entire section from the start to the end of the transport of the transported substrate 130, the productivity of the automated process may be improved.

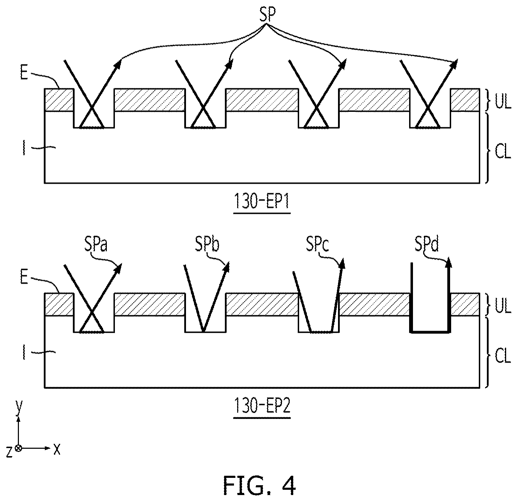

FIG. 4 is a view showing an example of a light scan trajectory and a substrate processed accordingly. FIG. 4 is a view showing a top view of a part of substrates 130-EP1 and 130-EP2 where processing by a scanner has been completed and a processing pattern has been formed.

In an embodiment, a scanner, which implements a light scan trajectory, may include a marking on the fly (MOF) function. The MOF function is a technology used in laser marking systems, which allows marking of moving objects using light. The MOF function allows synchronization of the substrate transport speed with the optical scan or marking speed. This allows the accuracy of the scan to be maintained even if the transport speed of the substrate changes. The MOF function allows light to be irradiated toward the exact location of the transported substrate. A MOF system may precisely control timing and location by irradiating light at the moment of reaching the location on the substrate, where light should be irradiated. Accordingly, it is possible to calculate a scan trajectory which forms a processing trajectory with set dimensions corresponding to the transport speed of the substrate. In addition, even if the substrate transport speed is high, such as approximately 1000 mm/s, when using the MOF system, the process of adjusting the light irradiation position according to the substrate transport is accomplished in a very short time, so that accurate scanning may be performed.

FIG. 4 shows some examples of substrates processed with specific processing trajectories, and shows the scan trajectories of the scanner that formed the processing trajectories. The processed transported substrate 130-EP1 in a constant velocity section where the substrate transport speed is constant, and the processed transported substrate 130-EP2 in a decelerating section where the substrate transport speed decreases may have the same processing trajectory, so the processing patterns of the final substrates may be the same. However, the scan trajectory SP of the scanner operated by the MOF system in the constant velocity section may be different from the scan trajectories SPa, SPb, SPc and SPd of the scanner operated by the MOF system in the deceleration section.

For example, the transported substrate 130-EP1 in a constant velocity section has a substantially constant substrate transport speed, so that the scan trajectories SP of the scanner forming each processing trajectory included in the processing pattern may be identical. On the other hand, in the transported substrate 130-EP2 in the deceleration section, the scan trajectories SPa, SPb, SPc and SPd of the scanner, which formed each processing trajectory included in each processing pattern, may vary depending on the transport speed.

For example, in the case of a scan trajectory SPa when the instantaneous speed, at which the substrate is transported in the x direction, is approximately 1000 mm/s, the first scan trajectory may be calculated as illustrated in FIG. 4 in order for the scanning of the scanner to form a processing trajectory in the direction (negative y direction) from one side E of the substrate toward the inside I of the substrate. The second scan trajectory and the third scan trajectory for forming a second processing trajectory processed in the longitudinal direction (negative x direction) of the substrate and a third processing trajectory processed in a direction from the inside I of the substrate toward the one side E of the substrate, respectively, may also be calculated as described above.

When the substrate transport speed is reduced and the instantaneous speed is approximately 500 mm/s, the scan trajectory SPb may have a larger inclination based on the x direction of the first scan trajectory, compared to the scan trajectory SPa when the instantaneous speed is approximately 1000 mm/s. By this principle, the scan trajectory SPd when the substrate is finally stopped becomes the same as the substrate processing trajectory. In the deceleration section, the scan trajectories SPa, SPb, SPc and SPd of the scanner, which formed each processing trajectory included in the processing pattern, are different, so it may not be possible to use a pattern jig in which a through hole of the same shape is formed. Therefore, the substrate processing apparatus may only be operated in a constant velocity section to use the pattern jig.

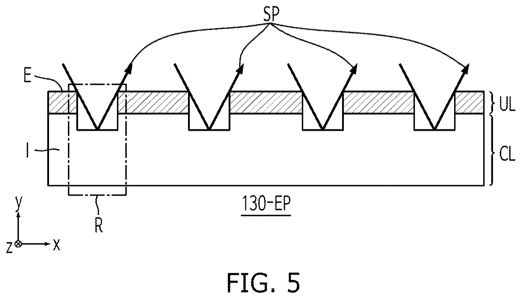

FIG. 5 is a view showing an example of a light scan trajectory and a substrate processed accordingly by a substrate processing apparatus according to an embodiment of the present disclosure. FIG. 5 is a view showing a top view of a part of a transported substrate 130-EP on which a processing pattern has been formed by completing processing by a scanner according to an embodiment. Specifically, FIG. 5 is a view showing a processing pattern of a substrate in which processing is repeatedly performed according to the substrate processing trajectory described above. Unlike FIG. 4, FIG. 5 shows a transported substrate 130-EP in a section where the substrate transport speed is variable.

In an embodiment, a first processing trajectory, which is processed in a direction (negative y direction) from one side E of the substrate toward the inside I of the substrate, and a third processing trajectory, which is processed in a direction (y direction) from the inside I of the substrate toward the one side E of the substrate, may each be parallel to the width of the substrate. At this time, if the substrate processing apparatus is a notching device, a substrate, in which a plurality of electrode tabs having a substantially rectangular shape are formed on the non-coated portion UL side, may be manufactured, as shown in FIG. 5.

FIG. 5 illustrates a scan trajectory SP forming a processing trajectory of a processed transported substrate 130-EP in a section (deceleration section or acceleration section) where the substrate transport speed changes. According to an embodiment, by varying the scan speed of the scanner in real time by the scanner control unit, the scan trajectory SP is kept constant regardless of the variation in the substrate transport speed, so that processing or notching may be performed consistently as shown in FIG. 5.

When the scan speed is controlled so that the relative speed, which is defined as the ratio between the substrate transport speed and the scan speed of the scanner, is constant, both the scan trajectory SP and the substrate processing trajectory may be kept constant, as shown in FIG. 5. In an embodiment, a constant processing trajectory may be maintained throughout the entire operation section of the substrate processing apparatus by controlling a scan speed of light corresponding to a first processing trajectory or a scan speed of light corresponding to a third processing trajectory.

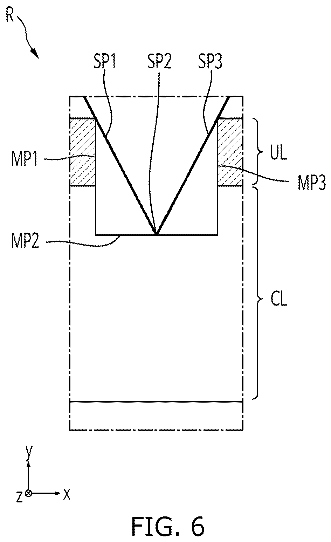

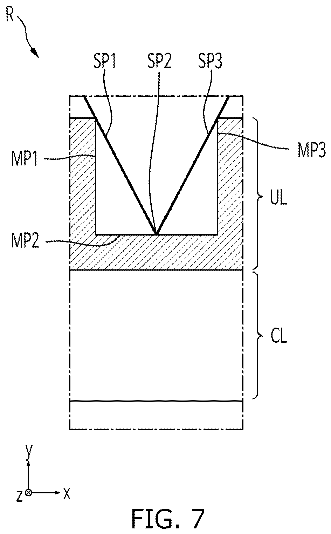

FIGS. 6 and 7 are views showing scan trajectories of region R of FIG. 5 and substrate processing trajectories according thereto.

Referring to FIG. 6, in an embodiment, a first processing trajectory MP1, which is processed in a direction from one side of the substrate (e.g., E of FIG. 5) toward the inside of the substrate (e.g., I of FIG. 5), may start from one side of the non-coated portion UL. Additionally, the third processing trajectory MP3 processed from the inside of the substrate toward the one side of the substrate may end at the one side described above. Additionally, a second processing trajectory MP2, which connects the first processing trajectory MP1 with the third processing trajectory MP3 and is processed in the longitudinal direction (x direction) of the substrate within the substrate, may be located within the composite portion CL. The second processing trajectory MP2 may be a processing trajectory by optical scanning in the direction opposite to the substrate transport direction. Processing in the composite portion CL and processing in the non-coated portion UL may have different conditions such as light output or pulse frequency. It is possible to control appropriate conditions to be applied in real time by the scanner itself or the interaction between the scanner and the light control device.

If the scan trajectory produced by the scanner control unit is always constant, there is no limitation on the shape of the resulting processing trajectory. That is, the first processing trajectory MP1 and the third processing trajectory MP3 may not necessarily be parallel to the width of the substrate. In this case, for example, an electrode tab having a sloped shape on one side may be formed.

Referring to FIG. 7, in another embodiment, the first processing trajectory MP1 may start at one side of the non-coated portion UL, the third processing trajectory MP3 may end at the one side of the non-coated portion UL, and the second processing trajectory MP2 may be located within the non-coated portion UL, which is the same area.

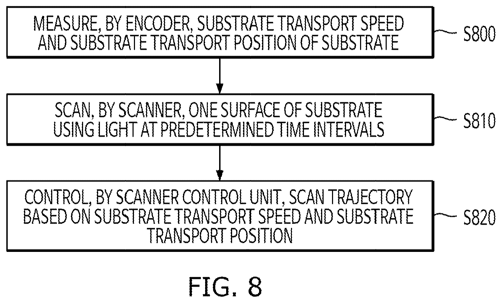

FIG. 8 is a flowchart for explaining a substrate processing method according to an embodiment of the present disclosure. The description that overlaps with the above-mentioned content is omitted.

A method for processing a substrate according to an embodiment of the present disclosure may include a step S800 in which an encoder measures a substrate transport speed and a substrate transport position of a substrate being transported, a step S810 in which a scanner scans one surface of a substrate being transported at predetermined time intervals using light, and a step S820 in which a scanner control unit controls a scan trajectory based on the substrate transport speed and the substrate transport position. At this time, the scanner control unit may maintain the scan trajectory constant regardless of the change in the substrate transport speed by changing the scan speed of the scanner in real time.

In an embodiment, the step of controlling the scan trajectory S820 may include the step of receiving a processing trajectory length and a relative speed of the substrate, and the step of calculating a scan trajectory corresponding to the input processing trajectory length. The step of generating a scan trajectory may include a step of controlling a scan speed of the scanner to allow a relative speed, which is defined as a ratio between a substrate transfer speed and a scan speed of the scanner, to be constant.

In an embodiment, in the step of generating a scan trajectory corresponding to an input processing trajectory length, the processing trajectory may include a first processing trajectory processed in a direction from one side of the substrate toward the inside of the substrate, a second processing trajectory processed in a longitudinal direction of the substrate from the inside of the substrate, and a third processing trajectory processed in a direction from the inside of the substrate toward the one side of the substrate. At this time, the substrate is processed in the order of the first processing trajectory, the second processing trajectory, and the third processing trajectory, and the substrate may be repeatedly processed by the above-described processing trajectories so that a certain processing pattern may be formed.

Here, the processing trajectory length, which is input from the scanner control unit, may mean, for example, the length of the second processing trajectory and the first processing trajectory (or the third processing trajectory). Additionally, the relative speed, which is input from the scanner control unit, may be a specific constant. The scanner control unit may control the scan trajectory so that the relative speed remains a specific constant throughout the entire operating section.

The flowchart of FIG. 8 and the above description are only examples of the present disclosure, and the flowchart of FIG. 8 may vary. For example, one or more steps in the flowchart and the above descriptions may be added/changed/deleted, the order of one or more steps may be changed, and one or more steps may be performed simultaneously.

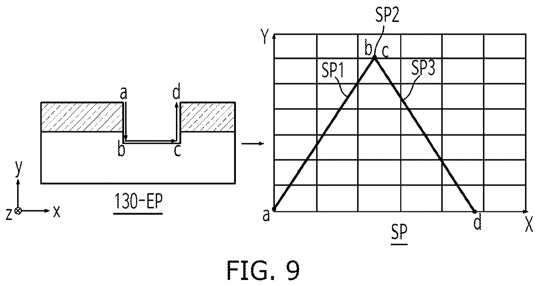

FIG. 9 is a diagram for explaining a step of calculating a scan trajectory corresponding to a processing trajectory length according to an embodiment of the present disclosure. FIG. 9 is a drawing for explaining a step of calculating a scan trajectory in a step (S820 of FIG. 8) in which the scanner control unit controls the scan trajectory based on the substrate transport speed and substrate transport position.

In an embodiment, the scan trajectory position of the scanner may be calculated by the scan movement time of the scanner [(processing trajectory length) / (scan speed of the scanner)] * (substrate transport speed). Therefore, when the processing trajectory length of the substrate is the same, if the ratio between the substrate transport speed and the scan speed of the scanner is maintained at a specific value, the scan trajectory of the scanner may be produced as a specific trajectory.

Referring to FIG. 9, in a section where the substrate transport speed varies, a processing trajectory from point a to point b may be calculated as a first scan trajectory SP1 by the scanner control unit, a processing trajectory from point b to point c may be calculated as a second scan trajectory SP2 by the scanner control unit, and a processing trajectory from point c to point d may be calculated as a third scan trajectory SP3 by the scanner control unit, on a processed transported substrate 130-EP. Accordingly, the scanner may process the substrate according to the final scan trajectory SP generated by the scanner control unit.

In an embodiment, the scanner control unit may receive inputs for the length between points a and b, the length between points b and c, and the ratio between the substrate transport speed and the scan speed of the scanner.

A method for calculating a scan trajectory according to an embodiment is as follows. In this example, it is assumed that the x-direction scan speed from point b to point c is 0.

The x-direction processing speed may be calculated as the sum of the scan speed and the substrate transport speed. The time required from point a to point b may be calculated as (length between points a and b) / (scan speed in the y direction of the scanner). The x-direction transport length of the substrate during the scan time from point a to point b may be calculated by the product of the x-direction processing speed and the scan movement time from point a to point b. The time required from point b to point c may be calculated as (length between points b and c) / (x-direction processing speed). The position of the x-direction substrate at point c may be calculated as [(the x-direction transport length of the substrate during the scan time from point a to point b) + (the transport speed of the substrate) * (time required from point b to point c)]. The time required from point c to point d may be calculated as (length between points a and b) / (scan speed in the y direction of the scanner). The position of the x-direction substrate at point d may be calculated by multiplying the previously calculated (time required from point a to point b + time required from point b to point c + time required from point c to point d) by the substrate transport speed.

The method for calculating the scan trajectory SP using the calculated result values as described above is as follows.

Referring to the right scan trajectory SP coordinates of FIG. 9, when the coordinate a is set to (0, 0), the b coordinate may be (the x-direction transport length of the substrate during the scan time from point a to point b, the length between points a and b). The c coordinate may be (the x-direction transport length of the substrate during the scan time from point a to point b, the length between points a and b) because the x-direction scan speed from point b to point c is 0. The d coordinate may be (the x-direction transport length of the substrate during the scan time from point a to point b + time required from point c to point d * y-direction scan speed of the scanner, 0).

Here, in the case of the notched substrate, the length between points a and b may be the length in the tab direction of the electrode tabs, and the length between points b and c may be the spacing length between the electrode tabs.

The methods, processes, and/or operations described herein may be performed by code or instructions to be executed by a computer, processor, controller, or other signal processing device. For example, the scanner control unit 160 and/or the light control device 172 may be a computing device, e.g., a workstation computer, a desktop computer, a laptop computer, a tablet computer, or the like, and may be implemented as a simple controller, a complex processor, e.g., a microprocessor, a central processing unit (CPU), a graphics processing unit (GPU) etc., or a processor composed of software, dedicated hardware or firmware, or the like. The computer, processor, controller, or other signal processing device may be those described herein or one in addition to the elements described herein.

Recently, the notching process is performed by irradiating laser on the substrate for precise processing. At this time, the scan trajectory of the laser and the substrate processing trajectory according to the laser may be precisely controlled during the continuous transport process of the substrate so that processing into a desired dimension may be achieved. However, because the substrate transport speed may not always be constant throughout the entire process, there is a problem that substrate processing to a constant dimension and/or substrate processing along a constant laser scan trajectory may not be achieved from the start to the end of substrate transport. In particular, because the laser scan trajectory fluctuates greatly in sections where the substrate transport speed increases or decreases, processing may be performed only in constant velocity sections where the substrate transport speed is generally constant. In this case, the production volume of the electrode plates may not be secured in the unprocessed section.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. A substrate processing apparatus, comprising:
an encoder (150) configured to measure a substrate transport speed and a substrate transport position of a substrate (130) being transported;
a scanner (170) configured to scan one surface of the substrate using light (L) at predetermined time intervals; and
a scanner control unit (160) configured to control a scan trajectory (SP) based on the substrate transport speed and the substrate transport position,
wherein the scanner control unit (160) maintains a scan trajectory (SP) constant regardless of changes in the substrate transport speed by changing a scan speed of the scanner (170) in real time.

2. The substrate processing apparatus as claimed in claim 1, wherein a substrate processing trajectory of the scanner control unit (160) comprises:
a first processing trajectory (MP1) processed in a direction from one side (E) of the substrate toward an inside (I) of the substrate;
a second processing trajectory (MP2) processed in a longitudinal direction of the substrate within the substrate; and
a third processing trajectory (MP3) processed in a direction from the inside (I) of the substrate toward the one side (E) of the substrate,
wherein the substrate is processed in an order of the first processing trajectory (MP1) , the second processing trajectory (MP2), and the third processing trajectory (MP3), and the substrate is repeatedly processed according to the substrate processing trajectory.

3. The substrate processing apparatus as claimed in claim 2, wherein:
the scanner control unit (160) is configured to maintain the scan trajectory (SP) and the substrate processing trajectory by maintaining constant the light regardless of changes in the substrate transport speed by controlling the scan speed to allow a relative speed, the relative speed being a ratio between the substrate transport speed and the scan speed, to be maintained constant, and
the scan speed is a scan speed of the light (L) corresponding to the first processing trajectory (MP1) or the third processing trajectory (MP3).

4. The substrate processing apparatus as claimed in claim 2 or claim 3, wherein the substrate (130) is cut along the substrate processing trajectory to form an electrode plate.

5. The substrate processing apparatus according to any one of the preceding claims 2 to 4, wherein:
the substrate (130) includes a composite portion (CL) having a part of one surface coated with a composite, and a non-coated portion (UL) located on an outer part of the one surface,
the first processing trajectory (MP1) starts from one side (E) of the non-coated portion (UL), and
the third processing trajectory (MP3) ends at the one side (E) of the non-coated portion (UL).

6. The substrate processing apparatus of any one of the preceding claims, wherein:
a pattern jig (140) having a through hole (140_H) corresponding to the scan trajectory (SP) of the light (L) is at a bottom of the substrate (130), and
the light (L) penetrates the through hole (140_H) of the pattern jig (140).

7. The substrate processing apparatus as claimed in claim 6, further comprising a suction portion (142) configured to suck processing debris (SP') of the substrate through the through hole (140_H) of the pattern jig (140), wherein the suction portion (142) is on a lower side of the pattern jig (140).

8. A method for processing a substrate, the method comprising:
measuring, by an encoder (150), a substrate transport speed and a substrate transport position of a substrate (130);
scanning, by a scanner (170), one surface of the substrate using light (L) at predetermined time intervals; and
controlling, by a scanner control unit (160), a scan trajectory (SP) based on the substrate transport speed and the substrate transport position,
wherein the scanner control unit (160) maintains constant the scan trajectory (SP) regardless of changes in the substrate transport speed by changing a scan speed of the scanner (170) in real time.

9. The method as claimed in claim 8, wherein controlling the scan trajectory comprises:
inputting a processing trajectory length and a relative speed of the substrate, and
generating a scan trajectory corresponding to the processing trajectory length,
wherein generating the scan trajectory comprises controlling the scan speed of the scanner to allow a relative speed, the relative speed being a ratio between the substrate transport speed and the scan speed of the scanner, to be maintained constant.

10. The method as claimed in claim 9, wherein, in generating the scan trajectory corresponding to the processing trajectory length, a substrate processing trajectory comprises:
a first processing trajectory processed in a direction from one side of the substrate toward an inside of the substrate;
a second processing trajectory processed in a longitudinal direction of the substrate within the substrate; and
a third processing trajectory processed in a direction from the inside of the substrate toward the one side of the substrate,
wherein the substrate is processed in an order of the first processing trajectory, the second processing trajectory, and the third processing trajectory, and the substrate is repeatedly processed by the substrate processing trajectory.

11. The method of any one of the preceding claims 8 to 10, wherein:
a pattern jig (140) having a through hole (140_H) corresponding to the scan trajectory of the light is located at a bottom of the substrate, and
the light penetrates the through hole (140_H) of the pattern jig.

12. The method of any one of the preceding claims 8 to 11 when combined with claim 9, wherein:
the scanning, by the scanner, includes scanning one surface of the substrate using light at predetermined time intervals, and
the substrate is cut along the substrate processing trajectory to form an electrode plate.

13. The method of any one of the preceding claims 8 to 12 when combined with claim 10, wherein in generating the scan trajectory corresponding to the processing trajectory length, the scan speed of the scanner corresponding to the second processing trajectory is zero.

14. The method of any one of the preceding claims 8 to 12 when combined with claim 10, wherein:
the substrate comprises a composite portion (CL) having a part of one surface coated with a composite, and a non-coated portion (UL) located on an outer part of the one surface,
the first processing trajectory starts from one side of the non-coated portion, and
the third processing trajectory ends at the one side of the non-coated portion.

15. The method as claimed in claim 14, wherein the second processing trajectory is within the composite portion (CL).
